# EUROPEAN PATENT APPLICATION

(11) **EP 4 825 715 A1**
(43) Date of publication of application: **21.10.2026**
(21) Application number: 26162564.4
(22) Date of filing: 05.03.2026
(51) Int. Cl.: B62J 17/02, B62K 11/04

(54) **STRADDLED VEHICLE**

(30) Priority: 16.04.2025 JP 2025067267
(71) Applicant: Yamaha Hatsudoki Kabushiki Kaisha, Iwata-shi, Shizuoka 438-8501 (JP)
(72) Inventor: YAMADA, Yuto, Iwata-Shi, 4388501 (JP); OISHI, Nobuaki, Iwata-Shi, 4388501 (JP); UCHISAWA, Akinori, Iwata-Shi, 4388501 (JP)
(74) Representative: Studio Torta S.p.A.

(57) **Abstract**

There is disclosed a straddled vehicle (1) including an engine (5), a side cowl (16), and an undercover (17); the engine (5) includes a crankcase (20) and a cylinder body (21); the cylinder body (21) being disposed above the crankcase (20); the side cowl (16) covering the engine (5) from the lateral side; the undercover (17) being made of a material having a higher heat resistance than the side cowl (16); the undercover (17) includingan overlap portion (30); the overlap portion (30) being disposed between the side cowl (16) and the engine (5) in the left-right direction of the vehicle (1); the overlap portion (30) overlapping with the side cowl (16) in the side view of the vehicle (1); an upper edge (30D) of the overlap portion (30) being disposed above the boundary (B) between the crankcase (20) and the cylinder body (21).

## Description

### TECHNICAL FIELD

The present invention relates to a straddled vehicle.

### PRIOR ART

Some straddled vehicles are equipped with a side cowl and an undercover. For example, in the straddled vehicle of Japanese Laid-Open Patent Publication 2016-013767 A, the side cowl covers an engine from the lateral side. The undercover is disposed below the side cowl.

When the side cowl and the undercover are made of different materials, it is necessary to design the arrangement of the side cowl and the undercover taking the characteristics of each material into consideration. For example, of the vehicle body cover, a portion disposed on a lateral side of an engine is exposed to high temperatures from the engine. Therefore, it is desirable to place the undercover made of a highly heat-resistant material on the lateral side of the engine. But in that case, degree of freedom in designing arrangements of the side cowl and undercover are reduced. An object of a present invention is to improve a heat resistance for the engine in the straddled vehicle and to increase the degree of freedom in designing the side cowl and undercover.

### DESCRIPTION OF THE INVENTION

A straddled vehicle according to one aspect of the present invention includes an engine, a side cowl, and an undercover. The engine includes a crankcase and a cylinder body. The cylinder body is disposed above the crankcase. The side cowl covers the engine from the lateral side of the vehicle. The undercover is made of a material with higher heat resistance than the side cowl. The undercover includes an overlap portion. The overlap portion is disposed between the side cowl and the engine in a left-right direction of the vehicle. The overlap portion overlaps with the side cowl in a side view of the vehicle. An upper edge of the overlap portion is disposed above a boundary between the crankcase and the cylinder body.

In a straddled vehicle of the present invention, the overlap portion of the undercover is disposed between the side cowl and the engine in the left-right direction of the vehicle, and the upper edge of the overlap portion is disposed above the boundary between the crankcase and the cylinder body. Therefore, the overlap portion reduces radiant heat from the engine to the side cowl. This improves the heat resistance against the engine in the straddled vehicle without using a highly heat-resistant material for the side cowl. Additionally, the overlap portion overlaps with the side cowl in the side view of the vehicle. This increases degree of freedom in designing an exterior of the side cowl and undercover.

The engine may include a crankshaft. A lower edge of the overlap portion may be disposed below an axis of the crankshaft. An area from the boundary between the crankcase and the cylinder body to the axis of the crankshaft is prone to high temperatures. By providing the overlap portion in this area, the radiant heat to the side cowl is reduced by the overlap portion. This improves the heat resistance of the straddled vehicle.

The lower edge of the overlap portion may be disposed below a rotation range of a crank web of the crankshaft. The area from the boundary between the crankcase and the cylinder body to the rotation range of the crank web of the crankshaft is prone to high temperatures. By providing the overlap portion in this area, the radiant heat to the side cowl is reduced by the overlap portion. This improves the heat resistance of the straddled vehicle.

The straddled vehicle may further include a water pump attached to the engine. The lower edge of the overlap portion may be disposed below the water pump. The area from the boundary between the crankcase and the cylinder body to the water pump is prone to high temperatures. By providing the overlap portion in this area, the radiant heat to the side cowl is reduced by the overlap portion. This improves the heat resistance of the straddled vehicle.

The straddled vehicle may further include an oil cleaner attached to the engine. The lower edge of the overlap portion may be disposed below the oil cleaner. The area from the boundary between the crankcase and the cylinder body to the oil cleaner is prone to high temperatures. By providing the overlap portion in this area, the radiant heat to the side cowl is reduced by the overlap portion. This improves the heat resistance of the straddled vehicle.

The engine may include a cylinder head disposed above the cylinder body. The upper edge of the overlap portion may be disposed above the boundary between the cylinder body and the cylinder head. In this case, the overlap portion extends to a higher position, and thus the radiant heat to the side cowl is reduced by the overlap portion. This improves the heat resistance of the straddled vehicle.

The overlap portion may be disposed with a gap from an inner surface of the side cowl. In this case, presence of the gap between the overlap portion and the inner surface of the side cowl makes it difficult for heat from the overlap portion to be transmitted to the side cowl.

The side cowl may include a protrusion protruding from the inner surface of the side cowl toward the overlap portion. In this case, the protrusion easily ensures the gap between the overlap portion and the inner surface of the side cowl.

The overlap portion may include an attachment hole disposed in correspondence with the protrusion. The overlap portion may be attached to the protrusion by a fastening member passed through the attachment hole. In this case, the overlap portion and the side cowl can be fixed together by the fastening member. The fastening member may be passed through the attachment hole from an inside of the overlap portion. In this case, the overlap portion can be easily attached to the protrusion with the fastening member.

The undercover may include an exterior surface disposed below the side cowl in the side view of the vehicle. The overlap portion may extend upward from a dividing line between the side cowl and the exterior surface in the side view of the vehicle. In this case, the degree of freedom in arranging the dividing line appearing on the exterior in the side view of the vehicle is improved.

The overlap portion may include a plurality of locking holes disposed along the dividing line. The side cowl may include a plurality of locking claws disposed along the dividing line. The plurality of the locking claws may be locked into the plurality of locking holes, respectively. In this case, the side cowl is prevented from shifting at the dividing line.

The side cowl may include a plurality of the protrusions. The plurality of the protrusions may protrude from the inner surface of the side cowl toward the overlap portion. The plurality of the protrusions may be attached with the overlap portion. In this case, the side cowl is prevented from shifting at the dividing lines.

The overlap portion may include an opening. In this case, the weight of the undercover is reduced. The overlap portion may include the attachment hole through which the fastening member may be passed for attaching the overlap portion. The opening may be larger than the attachment hole. In this case, by providing the large opening in the undercover, the weight of the undercover is reduced. The opening may be disposed below the boundary between the crankcase and the cylinder body. In this case, the weight of the undercover can be reduced while suppressing a decrease in the heat resistance.

The overlap portion may have a shape having a length in an up-down direction increasing toward a front. In this case, the overlap portion reduces the radiant heat to the side cowl radiated from a part tending to get hot, such as an exhaust pipe and a radiator. This improves the heat resistance of the straddled vehicle.

According to the present invention, in the straddled vehicle, the radiant heat from the engine to the side cowl is reduced by the overlap portion of the undercover. This improves the heat resistance against the engine in the straddled vehicle, and also increases the degree of freedom in designing the side cowl and undercover.

### BRIEF DESCRIPTION OF THE DRAWINGS

FIG. 1 is a side view of a straddled vehicle.
FIG. 2 is a front view of the straddled vehicle.
FIG. 3 is an enlarged left side view of the straddled vehicle.
FIG. 4 is an enlarged left side view of the straddled vehicle with a first side cowl omitted.
FIG. 5 is an enlarged right side view of the straddled vehicle.
FIG. 6 is an enlarged right side view of the straddled vehicle with a second side cowl omitted.
FIG. 7 is a view showing an outer surface of the first side cowl and a first undercover.
FIG. 8 is a view showing an inner surface of the first side cowl and the first undercover.
FIG. 9 is a view showing the outer surface of the first undercover.
FIG. 10 is a view showing the inner surface of the first undercover.
FIG. 11 is a front view of the first undercover.
FIG. 12 is a view showing the inner surface of the first side cowl.
FIG. 13 is a cross-sectional view taken along a line A-A in FIG. 8.
FIG. 14 is a cross-sectional view taken along a line B-B in FIG. 8.
FIG. 15 is a cross-sectional view taken along a line C-C in FIG. 8.
FIG. 16 is a view showing an outer surface of the second side cowl and a second undercover.
FIG. 17 is a view showing an inner surface of the second side cowl and the second undercover.
FIG. 18 is a view showing the outer surface of the second undercover.
FIG. 19 is a view showing the inner surface of the second undercover.
FIG. 20 is a front view of the second undercover.
FIG. 21 is a view showing the inner surface of the second side cowl.

### EMBODIMENTS OF THE INVENTION

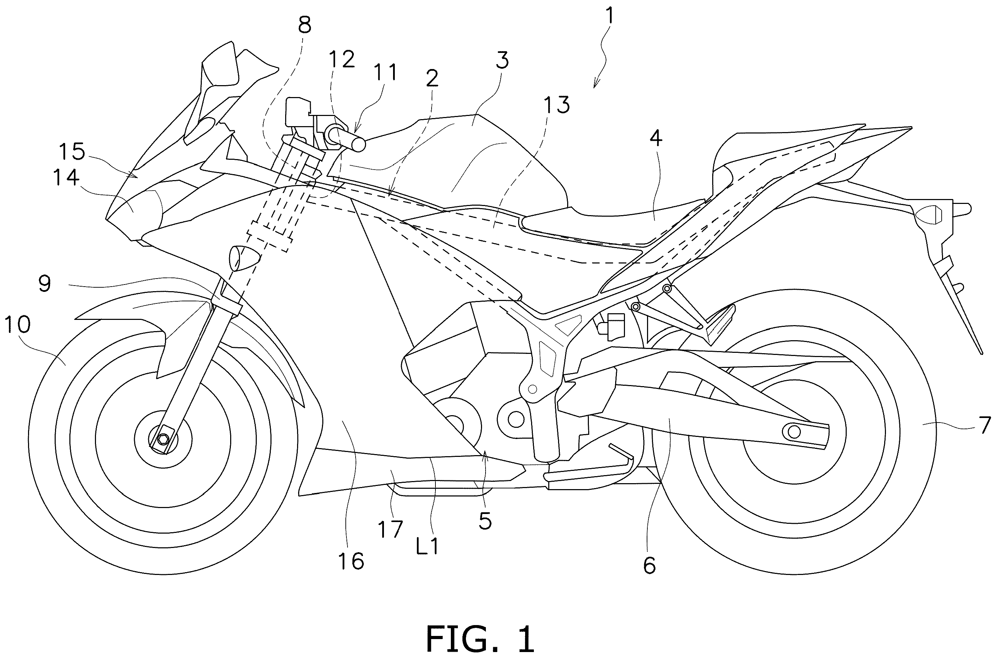

A straddled vehicle according to an embodiment will now be described with reference to the drawings. FIG. 1 is a side view of a straddled vehicle 1. The straddled vehicle 1 is a so-called sports type motorcycle. As shown in FIG. 1, the straddled vehicle 1 includes a body frame 2, a fuel tank 3, a seat 4, an engine 5, a swing arm 6, a rear wheel 7, a steering shaft 8, a front fork 9, a front wheel 10, and a handle member 11. In this embodiment, the terms "front, back, left, and right" refer to the front, back, left, and right directions as seen from a rider seated on the seat 4.

The body frame 2 includes a head pipe 12 and a main frame 13. The head pipe 12 is disposed at the center of the vehicle in the vehicle width direction. The main frame 13 is connected to the head pipe 12 and is disposed behind the head pipe 12. The fuel tank 3 is disposed behind the head pipe 12. The seat 4 is disposed behind the fuel tank 3. The engine 5 is disposed below the fuel tank 3. The engine 5 is supported by the main frame 13. The rear wheel 7 is disposed behind the engine 5. The rear wheel 7 is supported by the main frame 13 via the swing arm 6.

The steering shaft 8 is supported by the head pipe 12 so as to be rotatable left and right. The front fork 9 is connected to the steering shaft 8. The front wheel 10 is rotatably supported at the bottom of the front fork 9. The handle member 11 is connected to the steering shaft 8.

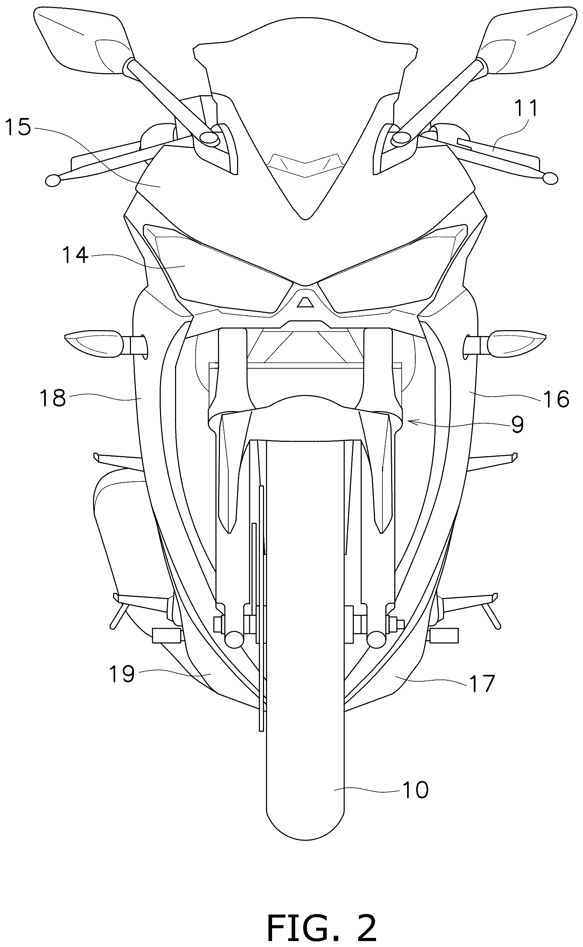

FIG. 2 is a front view of the straddled vehicle 1. As shown in FIGS. 1 and 2, the straddled vehicle 1 includes a front cover 15, a first side cowl 16, a first undercover 17, a second side cowl 18, and a second undercover 19. The straddled vehicle 1 is a so-called full-cowl type vehicle. The front cover 15 is disposed in front of the head pipe 12 and the handle member 11. A headlight 14 is disposed on the front cover 15.

The first side cowl 16 is disposed on one lateral side of the head pipe 12. The second side cowl 18 is disposed on the other lateral side of the head pipe 12. The first side cowl 16 covers the engine 5 from one lateral side. The second side cowl 18 covers the engine 5 from the other lateral side. In this embodiment, the first side cowl 16 covers the engine 5 from the left side. The second side cowl 18 covers the engine 5 from the right side. However, the first side cowl 16 and the second side cowl 18 may be disposed with the left and right sides reversed.

The first undercover 17 is disposed below the first side cowl 16. The second undercover 19 is disposed below the second side cowl 18. The first undercover 17 and the second undercover 19 are made of a material with higher heat resistance than the first side cowl 16 and the second side cowl 18. The material of the first undercover 17 and the second undercover 19 has a higher melting point than the material of the first side cowl 16 and the second side cowl 18. The material of the first undercover 17 and the second undercover 19 has a higher molding shrinkage rate than the material of the first side cowl 16 and the second side cowl 18.

For example, the first side cowl 16 and the second side cowl 18 are made of polyamide (PA) resin. The first undercover 17 and the second undercover 19 are made of ABS resin. However, the first side cowl 16 and the second side cowl 18 may be made of the material other than polyamide. The first undercover 17 and the second undercover 19 may be made of the material other than ABS resin.

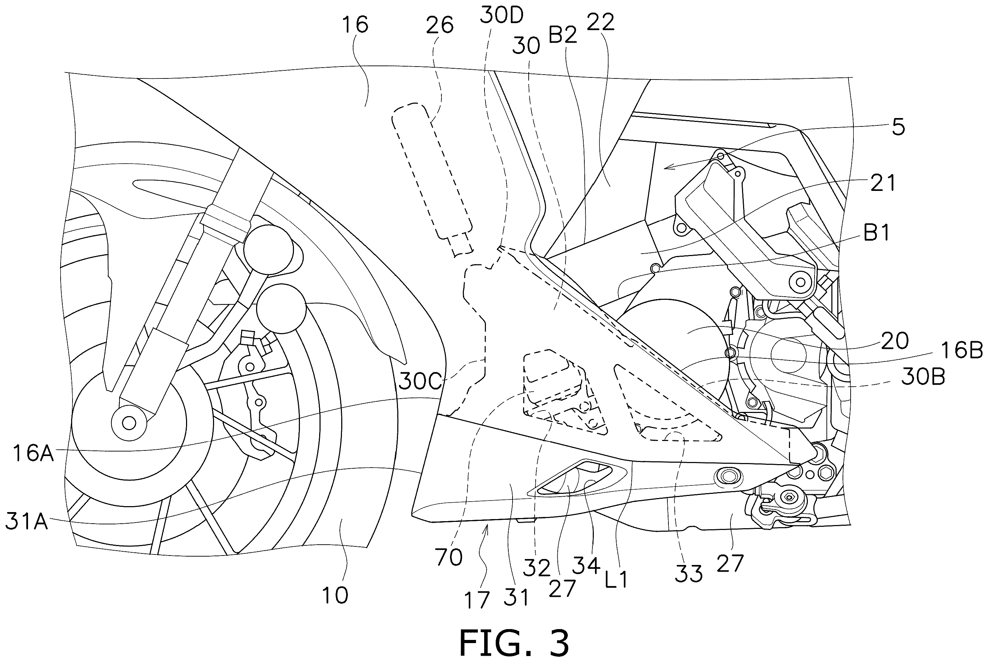

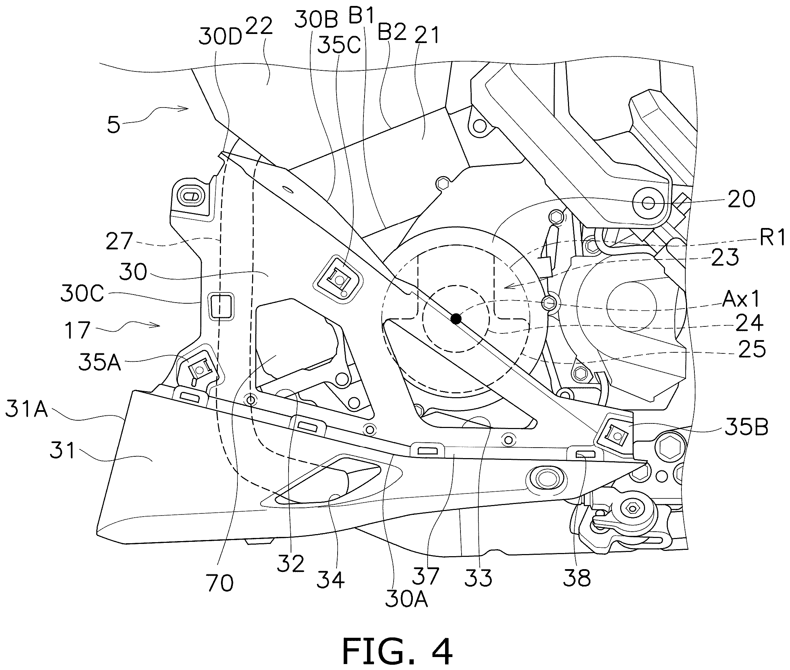

FIG. 3 is an enlarged left side view of the straddled vehicle 1. FIG. 4 is an enlarged left side view of the straddled vehicle 1 with the first side cowl 16 omitted. As shown in FIGS. 3 and 4, the engine 5 includes a crankcase 20, a cylinder body 21, and a cylinder head 22. The cylinder body 21 is disposed above the crankcase 20. The cylinder body 21 is attached to the crankcase 20. The cylinder head 22 is disposed above the cylinder body 21. The cylinder head 22 is attached to the cylinder body 21. As shown in FIG. 4, the engine 5 includes a crankshaft 23. The crankshaft 23 is disposed within the crankcase 20. The crankshaft 23 includes a main shaft 24 and a crank web 25.

As shown in FIG. 3, the straddled vehicle 1 includes a radiator 26. The radiator 26 is disposed in front of the engine 5. As shown in FIG. 4, the straddled vehicle 1 includes an exhaust pipe 27. The exhaust pipe 27 is connected to the engine 5. The exhaust pipe 27 passes in front of the engine 5 and extends downward. The exhaust pipe 27 is curved rearward.

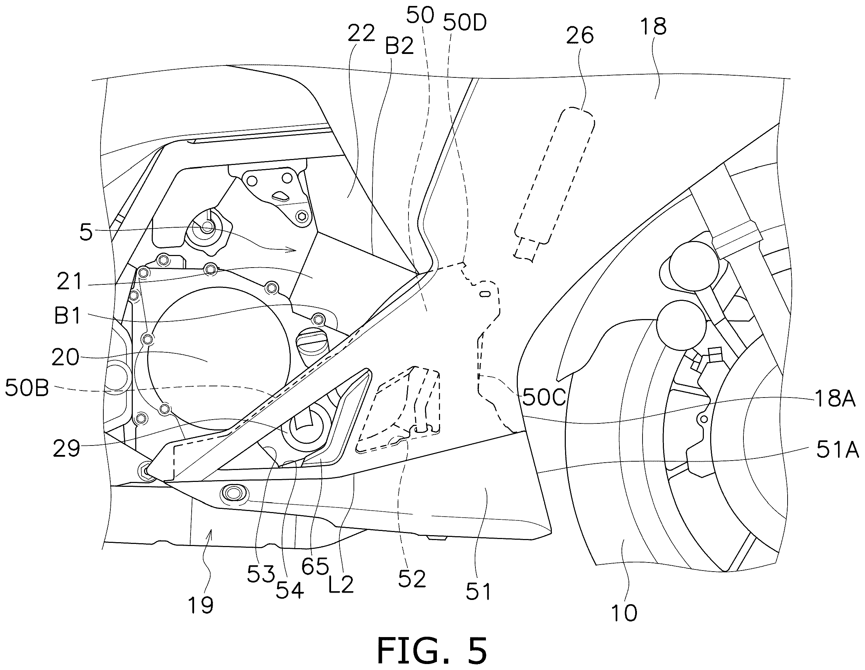

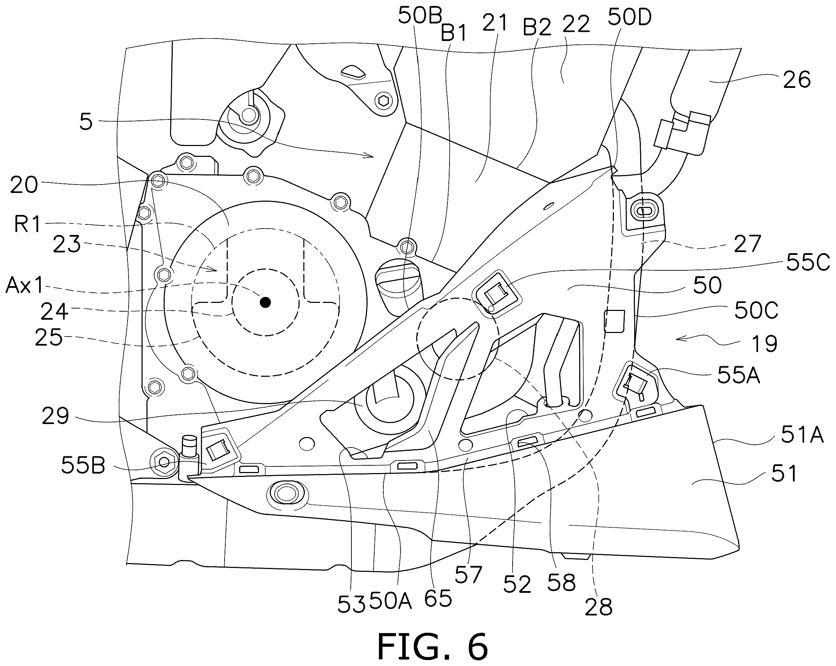

FIG. 5 is an enlarged right side view of the straddled vehicle 1. FIG. 6 is an enlarged right side view of the straddled vehicle 1 with the second side cowl 18 omitted. As shown in FIGS. 5 and 6, the straddled vehicle 1 includes a water pump 28 and an oil cleaner 29. The water pump 28 and the oil cleaner 29 are attached to the engine 5. The water pump 28 and the oil cleaner 29 are attached to the lateral side surface of the crankcase 20.

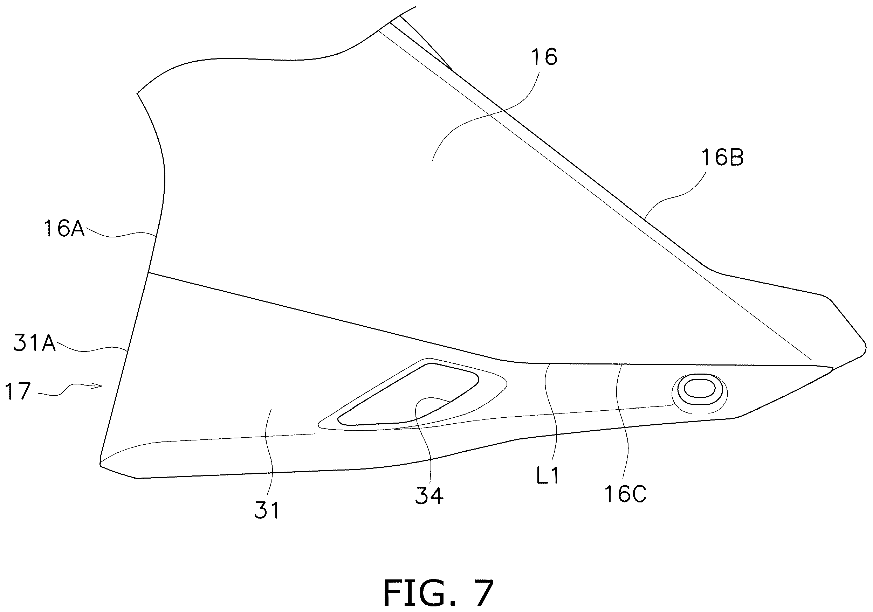

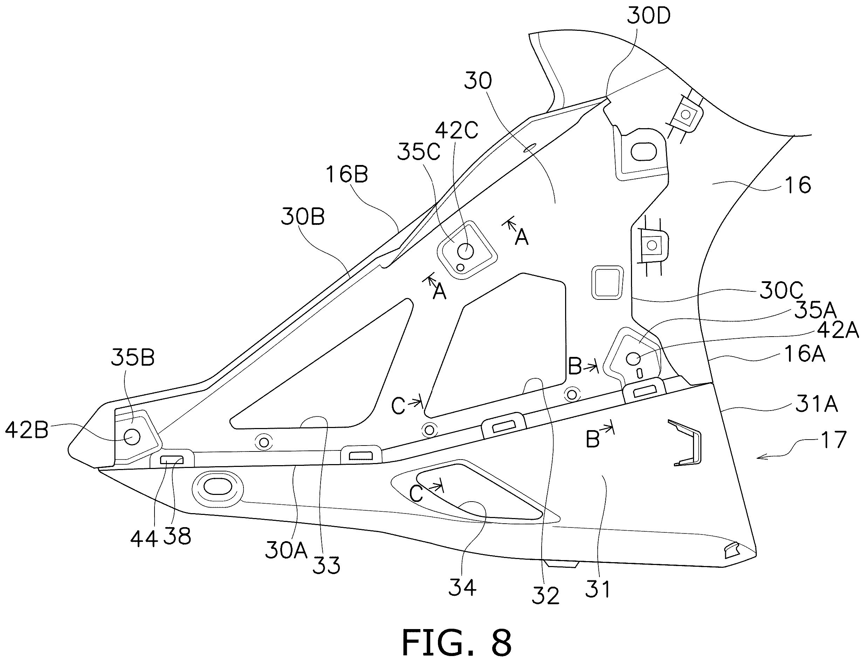

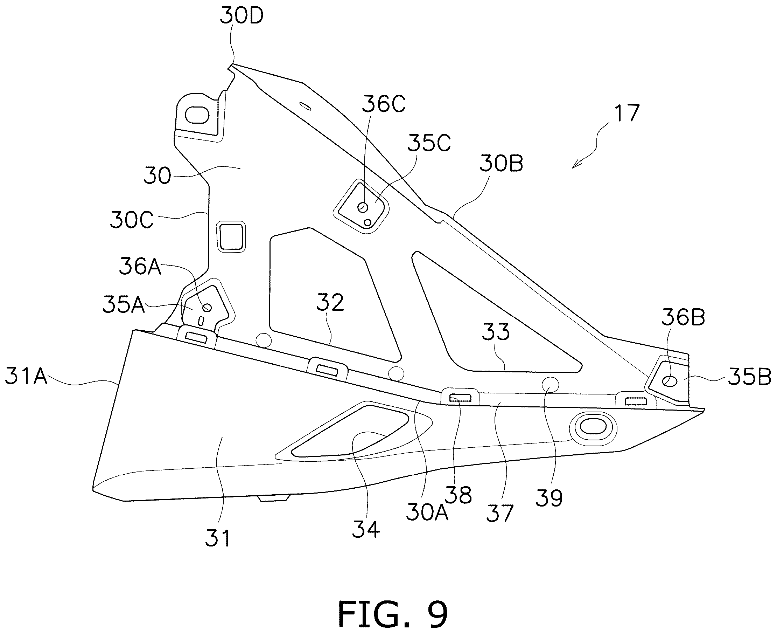

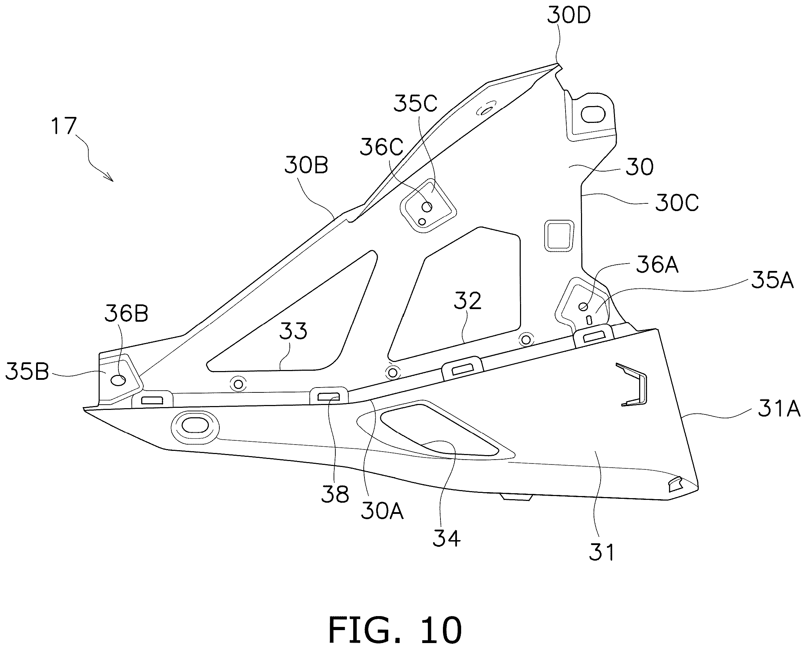

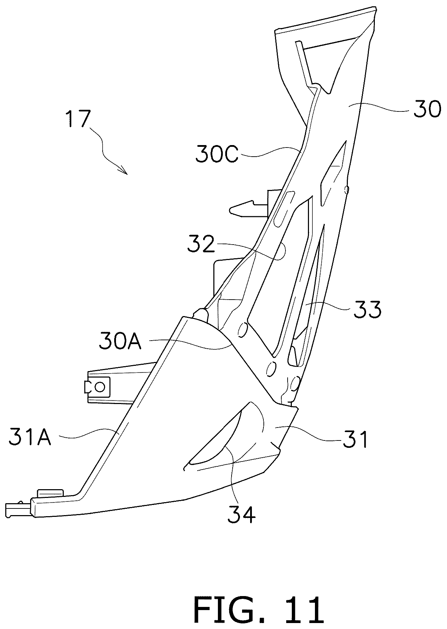

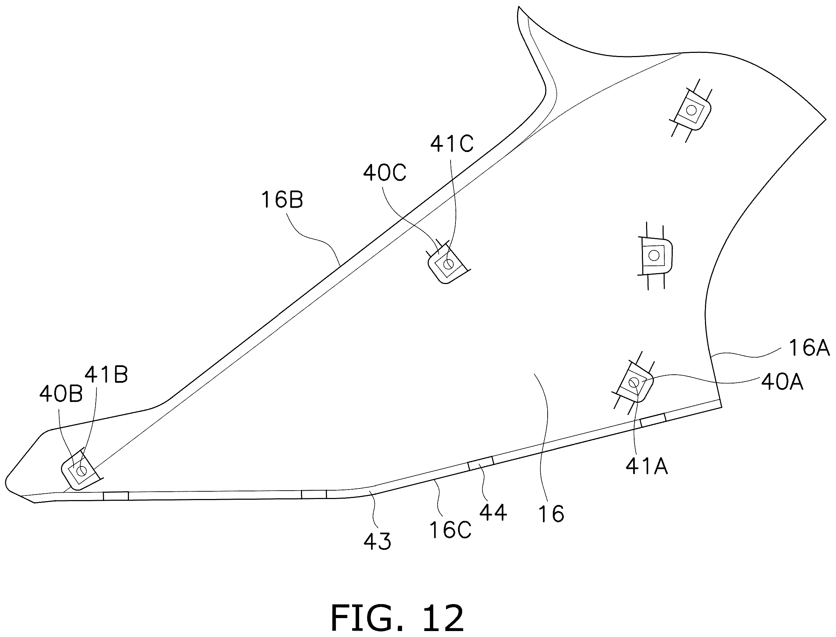

FIG. 7 is a view showing an outer surface of the first side cowl 16 and the first undercover 17. FIG. 8 is a view showing an inner surfaces of the first side cowl 16 and the first undercover 17. FIG. 9 is a view showing the outer surface of the first undercover 17. FIG. 10 is a view showing the inner surface of the first undercover 17. FIG. 11 is a front view of the first undercover 17. FIG. 12 is a view showing the inner surface of the first side cowl 16.

As shown in FIGS. 3 and 4 and 7 to 11, the first undercover 17 includes a first overlap portion 30 and a first exterior surface 31. As shown in FIG. 3, the first overlap portion 30 is disposed inside the first side cowl 16 in the left-right direction of the vehicle. The first side cowl 16 covers the first overlap portion 30 from the outside in the left-right direction of the vehicle. The first overlap portion 30 overlaps with the first side cowl 16 in the side view of the vehicle. The first overlap portion 30 is disposed between the first side cowl 16 and the engine 5 in the left-right direction of the vehicle. As shown in FIG. 4, the first overlap portion 30 overlaps with the crankcase 20 in the side view of the vehicle. The first overlap portion 30 overlaps with the cylinder body 21 in the side view of the vehicle. The first overlap portion 30 overlaps with the exhaust pipe 27 in the side view of the vehicle.

The first exterior surface 31 is disposed below the first overlap portion 30 in the side view of the vehicle. The first exterior surface 31 is disposed below the first side cowl 16 in the side view of the vehicle. The first side cowl 16 does not overlap with the first exterior surface 31 in the left-right direction of the vehicle, and the first exterior surface 31 is exposed to the outside. A front edge 31A of the first exterior surface 31 is smoothly continuous with a front edge 16A of the first side cowl 16. In the side view of the vehicle, a first dividing line L1 appears between the first side cowl 16 and the first exterior surface 31.

The first overlap portion 30 extends upward from the first dividing line L1 between the first side cowl 16 and the first exterior surface 31 in the side view of the vehicle. The first overlap portion 30 has a shape having a length in the up-down direction increasing toward the front. Specifically, the first overlap portion 30 includes a first lower edge 30A, a first upper edge 30B, and a first front edge 30C. The first lower edge 30A extends in the front-rear direction along the first dividing line L1. The first lower edge 30A is disposed below an axis Ax1 of the crankshaft 23. The first lower edge 30A is disposed below the rotation range R1 of the crank web 25 of the crankshaft 23.

The first upper edge 30B extends obliquely upward and forward. The first upper edge 30B is disposed along the rear edge 16B of the first side cowl 16. The first upper edge 30B overlaps with the crankcase 20 in the side view of the vehicle. The first upper edge 30B overlaps with the cylinder body 21 in the side view of the vehicle. The first upper edge 30B extends toward an upper edge 30D of the first overlap portion 30.

The first front edge 30C extends in the up-down direction. The first front edge 30C extends toward the upper edge 30D of the first overlap portion 30. The upper edge 30D of the first overlap portion 30 is disposed above a boundary B1 between the crankcase 20 and the cylinder body 21. The upper edge 30D of the first overlap portion 30 is disposed above a boundary B2 between the cylinder body 21 and the cylinder head 22.

The first overlap portion 30 includes a first front opening 32 and a first rear opening 33. The first front opening 32 is disposed below the boundary B1 between the crankcase 20 and the cylinder body 21. The first front opening 32 faces a canister 70 in the left-right direction of the vehicle. The first front opening 32 overlaps with the canister 70 in the side view of the vehicle. The first rear opening 33 is disposed behind the first front opening 32. The first rear opening 33 is disposed below the boundary B1 between the crankcase 20 and the cylinder body 21. The first rear opening 33 faces the crankcase 20 in the left-right direction of the vehicle. The first rear opening 33 overlaps with the crankcase 20 in the side view of the vehicle.

The first exterior surface 31 includes a lower opening 34. The lower opening 34 is disposed lower than the first front opening 32 and the first rear opening 33. The lower opening 34 faces the exhaust pipe 27 in the left-right direction of the vehicle. The lower opening 34 overlaps with the exhaust pipe 27 in the side view of the vehicle. The openings 32-34 described above are larger than first fastening portions 35A-35C, which will be described later, in the side view of the vehicle. The openings 32-34 are larger than first attachment holes 36A-36C, which will be described later, in the side view of the vehicle.

As shown in FIG. 12, the first side cowl 16 includes a plurality of first protrusions 40A-40C. The plurality of the first protrusions each 40A-40C protrude inward in the left-right direction of the vehicle from the inner surface of the first side cowl 16. The plurality of first protrusions 40A-40C include a first front protrusion 40A, a first rear protrusion 40B, and a first upper protrusion 40C. The first front protrusion 40A and the first rear protrusion 40B are disposed along the lower edge 16C of the first side cowl 16 and disposed apart from each other in the front-rear direction. The first upper protrusion 40C is disposed higher than the first front protrusion 40A and the first rear protrusion 40B. The first front protrusion 40A, the first rear protrusion 40B, and the first upper protrusion 40C are provided with first screw holes 41A-41C, respectively.

As shown in FIGS. 9 and 10, the first overlap portion 30 includes a plurality of first fastening portions 35A-35C. The first fastening portions 35A-35C are disposed in correspondence with the first protrusions 40A-40C of the first side cowl 16. The plurality of the first fastening portions 35A-35C protrude from the outer surface of the first overlap portion 30. The plurality of the first fastening portions 35A-35C include a first front fastening portion 35A, a first rear fastening portion 35B, and a first upper fastening portion 35C.

The first front fastening portion 35A is disposed in correspondence with the first front protrusion 40A. The first rear fastening portion 35B is disposed in correspondence with the first rear protrusion 40B. The first upper fastening portion 35C is disposed in correspondence with the first upper protrusion 40C. The first front fastening portion 35A and the first rear fastening portion 35B are disposed apart from each other in the front-rear direction along the first lower edge 30A of the first overlap portion 30. The first upper fastening portion 35C is disposed above the first front fastening portion 35A and the first rear fastening portion 35B. The first front fastening portion 35A, the first rear fastening portion 35B, and the first upper fastening portion 35C are provided with first attachment holes 36A-36C, respectively.

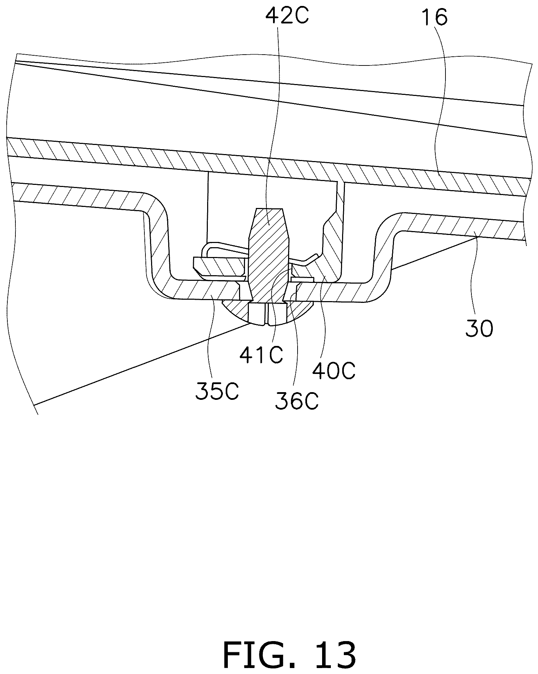

FIG. 13 is a cross-sectional view taken along a line A-A in Fig 8. As shown in FIG. 13, the first upper fastening portion 35C is attached to the first upper protrusion 40C by a first fastening member 42C, such as a screw, passed through the first attachment hole 36C and the first screw hole 41C. Similarly, as shown in FIG. 8, the first front fastening portion 35A is attached to the first front protrusion 40A by a first fastening member 42A. The first rear fastening portion 35B is attached to the first rear protrusion 40B by a first fastening member 42B. As a result, the first overlap portion 30 is attached to the first protrusions 40A-40C of the first side cowl 16. The first fastening members 42A-42C are passed through the first attachment holes 36A-36C from the inside of the first overlap portion 30, respectively.

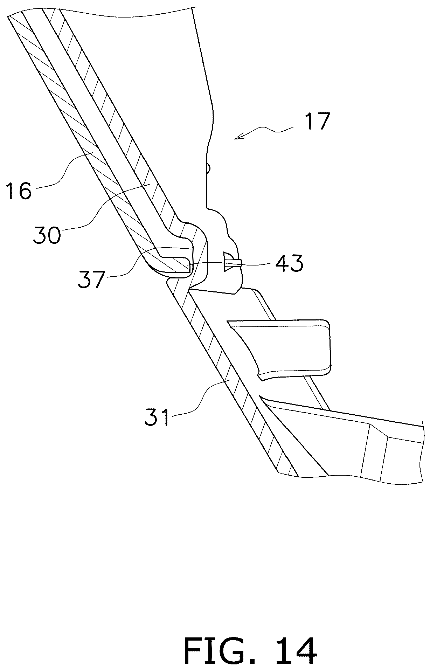

FIG. 14 is a cross-sectional view taken along a line B-B in FIG. 8. As shown in FIG. 14, the first overlap portion 30 includes a first recessed groove 37. The first recessed groove 37 has a shape recessed from the outer surface of the first overlap portion 30. The first recessed groove 37 extends along the first lower edge 30A of the first overlap portion 30. The lower edge 16C of the first side cowl 16 includes a first bent portion 43. The first bent portion 43 is bent inward in the left-right direction of the vehicle. The first bent portion 43 is disposed in the first recessed groove 37.

As shown in FIG. 9, the first overlap portion 30 includes a plurality of first locking holes 38. The plurality of first locking holes 38 are disposed along the first dividing line L1. The plurality of first locking holes 38 are provided in the first recessed groove 37. In the drawings, only one of the first locking hole 38 is labeled with the reference numeral 38, and the reference numerals for the other first locking holes 38 are omitted.

As shown in FIG. 12, the first side cowl 16 includes a plurality of first locking claws 44. In the drawings, only one of the first locking claw 44 is designated by the reference numeral 44, and the reference numerals of the other first locking claws 44 are omitted. The plurality of first locking claws 44 are disposed along the lower edge 16C of the first side cowl 16. The plurality of first locking claws 44 are disposed along the first dividing line L1. The first locking claws 44 are respectively locked into the first locking holes 38. As a result, the lower edge 16C of the first side cowl 16 is attached to the first lower edge 30A of the first overlap portion 30 along the first dividing line L1.

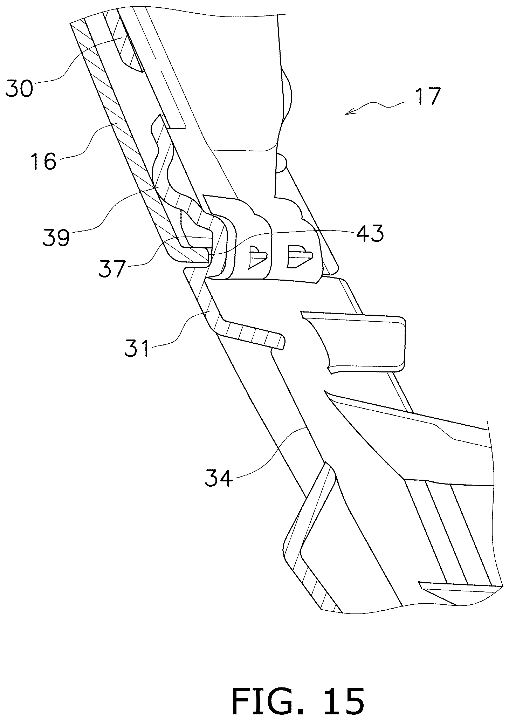

FIG. 15 is a cross-sectional view taken along a line C-C in FIG. 8. As shown in FIGS. 9 and 15, the first overlap portion 30 includes a plurality of first projections 39. In the drawings, only one of the plurality of first projections 39 are designated by the reference numeral 39, and the reference numerals of the other first projections 39 are omitted. The plurality of first projections 39 are disposed along the first lower edge 30A of the first overlap portion 30. The plurality of first projections 39 protrude from the outer surface of the first overlap portion 30. As shown in FIG. 15, the plurality of first projections 39 are in contact with the inner surface of the first side cowl 16. As shown in Figures 13 to 15, the first overlap portion 30 is disposed with a gap from the inner surface of the first side cowl 16 due to the plurality of first projections 39 of the first overlap portion 30 and the plurality of first protrusions 40A-40C of the first side cowl 16.

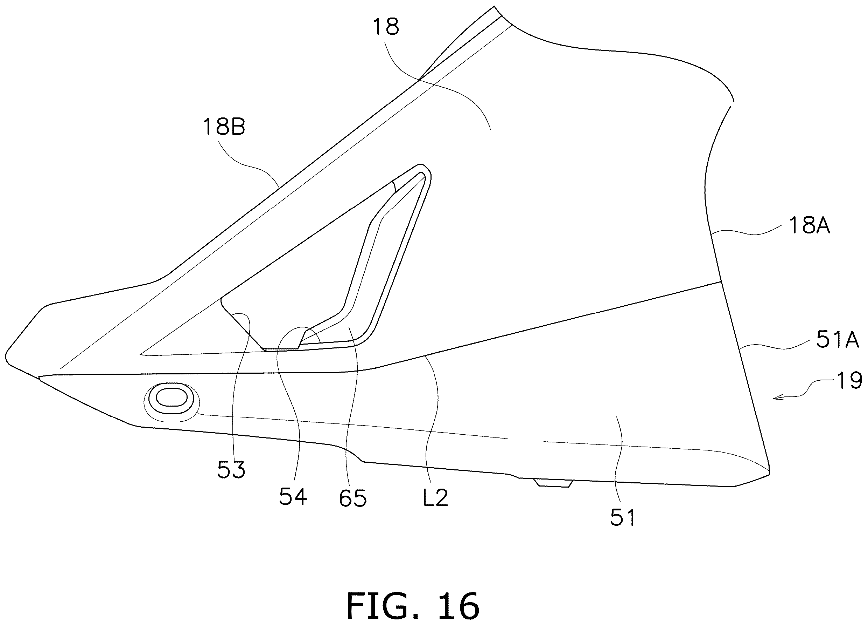

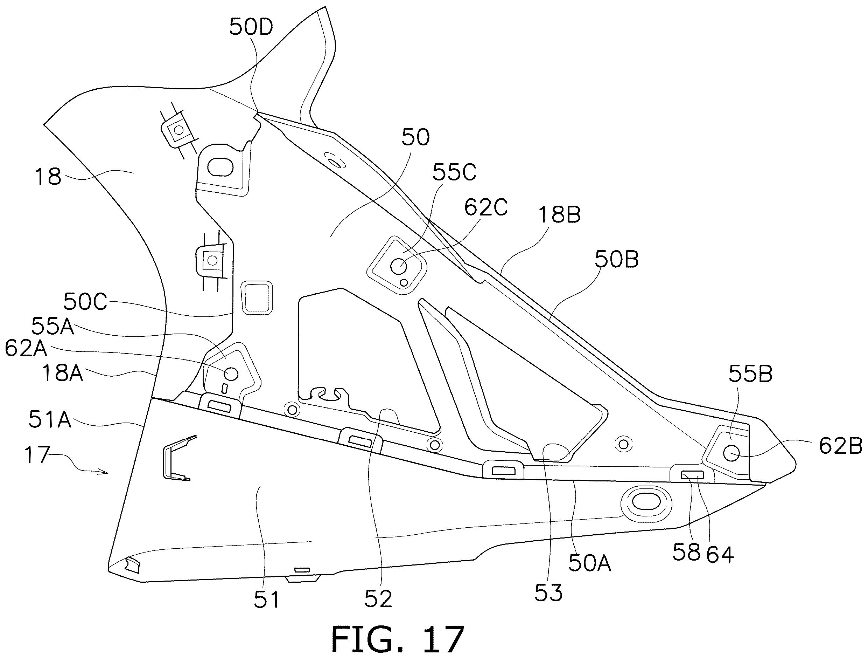

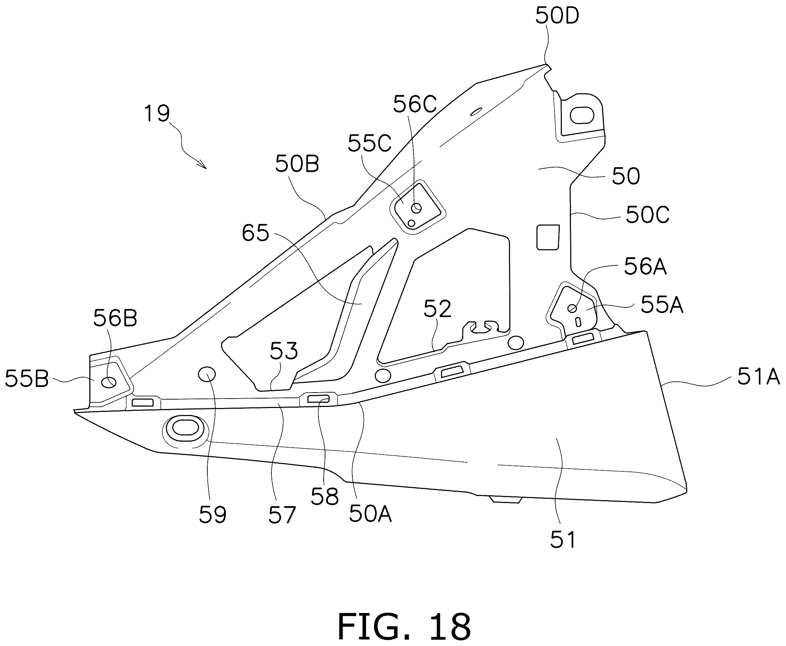

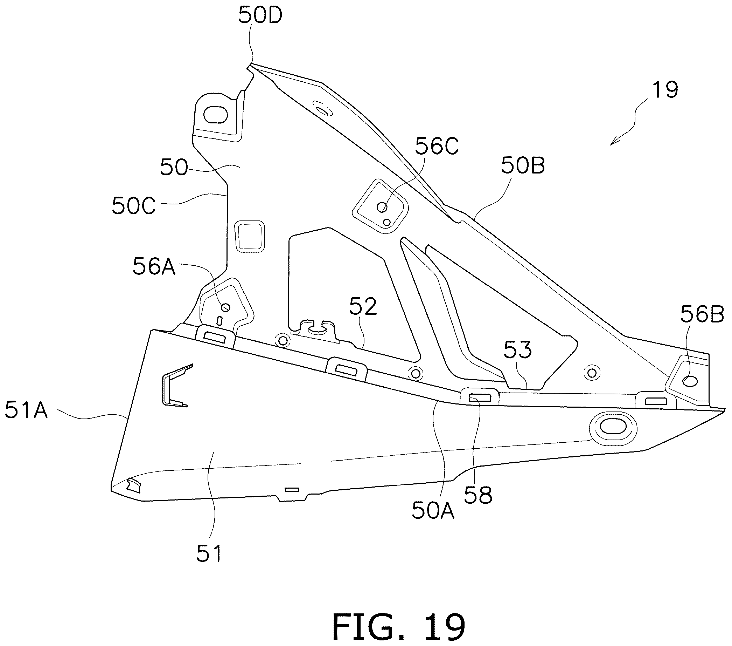

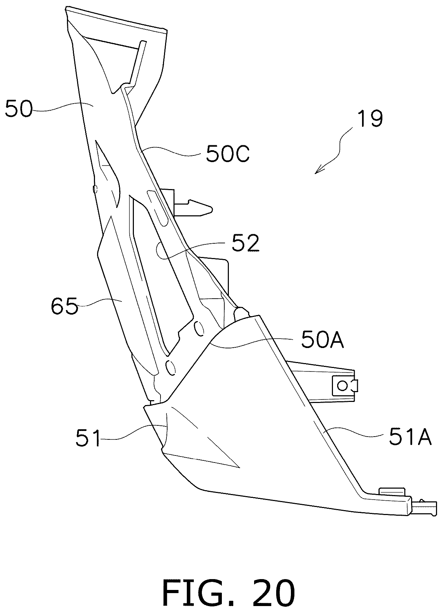

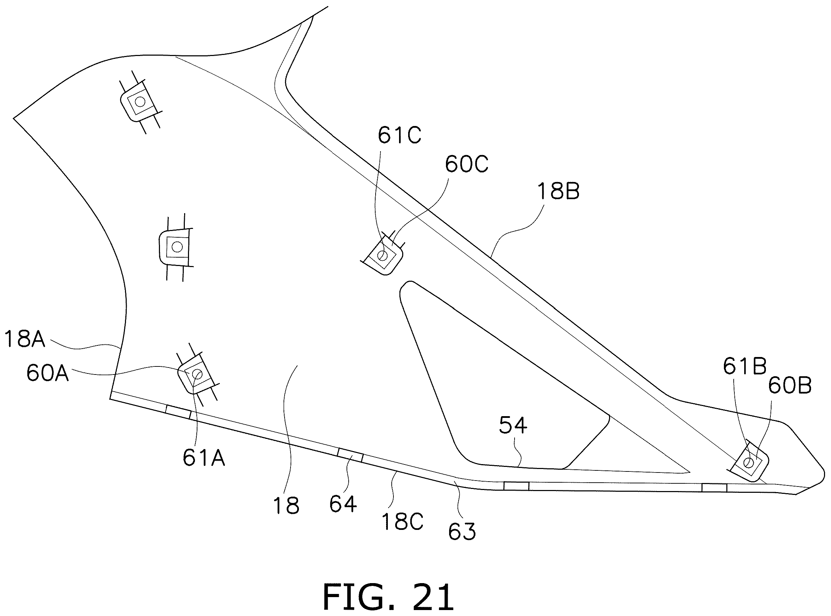

The second side cowl 18 is disposed symmetrically to the first side cowl 16 in the left-right direction of the vehicle. The second undercover 19 is disposed symmetrically to the first undercover 17 in the left-right direction of the vehicle. FIG. 16 is a view showing an outer surface of the second side cowl 18 and the second undercover 19. FIG. 17 is a view showing an inner surfaces of the second side cowl 18 and the second undercover 19. FIG. 18 is a view showing an outer surface of the second undercover 19. FIG. 19 is a view showing the inner surface of the second undercover 19. FIG. 20 is a front view of the second undercover 19. FIG. 21 is a view showing the inner surface of the second side cowl 18.

As shown in FIGS. 5 and 6 and 16 to 20, the second undercover 19 includes a second overlap portion 50 and a second exterior surface 51. As shown in FIG. 5, the second overlap portion 50 is disposed inside the second side cowl 18 in the left-right direction of the vehicle. The second side cowl 18 covers the second overlap portion 50 from the outside in the left-right direction of the vehicle. The second overlap portion 50 overlaps with the second side cowl 18 in the side view of the vehicle. The second overlap portion 50 is disposed between the second side cowl 18 and the engine 5 in the left-right direction of the vehicle. As shown in FIG. 6, the second overlap portion 50 overlaps with the crankcase 20 in the side view of the vehicle. The second overlap portion 50 overlaps with the cylinder body 21 in the side view of the vehicle. The second overlap portion 50 overlaps with the exhaust pipe 27 in the side view of the vehicle.

The second exterior surface 51 is disposed below the second overlap portion 50 in the side view of the vehicle. The second exterior surface 51 is disposed below the second side cowl 18 in the side view of the vehicle. The second side cowl 18 does not overlap with the second exterior surface 51 in the left-right direction of the vehicle, and the second exterior surface 51 is exposed to the outside. A front edge 51A of the second exterior surface 51 is smoothly continuous with a front edge 18A of the second side cowl 18. In the side view of the vehicle, a second dividing line L2 appears between the second side cowl 18 and the second exterior surface 51.

The second overlap portion 50 extends upward from the second dividing line L2 between the second side cowl 18 and the second exterior surface 51 in the side view of the vehicle. The second overlap portion 50 has a shape having a length in the up-down direction increasing toward the front. Specifically, the second overlap portion 50 includes a second lower edge 50A, a second upper edge 50B, and a second front edge 50C. The second lower edge 50A extends in the front-rear direction along the second dividing line L2. The second lower edge 50A is disposed below the axis Ax1 of the crankshaft 23. The second lower edge 50A is disposed below the rotation range R1 of the crank web 25 of the crankshaft 23. The second lower edge 50A is disposed below the water pump 28. The second lower edge 50A is disposed below the oil cleaner 29.

The second upper edge 50B extends obliquely upward and forward. The second upper edge 50B is disposed along the rear edge 18B of the second side cowl 18. The second upper edge 50B overlaps with the crankcase 20 in the side view of the vehicle. The second upper edge 50B overlaps with the cylinder body 21 in the side view of the vehicle. The second upper edge 50B extends toward the upper edge 50D of the second overlap portion 50.

The second front edge 50C extends in the up-down direction. The second front edge 50C extends toward the upper edge 50D of the second overlap portion 50. An upper edge 50D of the second overlap portion 50 is disposed above the boundary B1 between the crankcase 20 and the cylinder body 21. The upper edge 50D of the second overlap portion 50 is disposed above the boundary B2 between the cylinder body 21 and the cylinder head 22.

The second overlap portion 50 includes a second front opening 52 and a second rear opening 53. The second front opening 52 is disposed below the boundary B1 between the crankcase 20 and the cylinder body 21. The second front opening 52 faces the crankcase 20 in the left-right direction of the vehicle. The second front opening 52 overlaps with the crankcase 20 in the side view of the vehicle. The second rear opening 53 is disposed behind the second front opening 52. The second rear opening 53 is disposed below the boundary B1 between the crankcase 20 and the cylinder body 21. The second rear opening 53 faces the crankcase 20 in the left-right direction of the vehicle. The second rear opening 53 overlaps with the crankcase 20 in the side view of the vehicle. The second rear opening 53 faces the oil cleaner 29 in the left-right direction of the vehicle. The second rear opening 53 overlaps with the oil cleaner 29 in the side view of the vehicle.

The second side cowl 18 includes an outer opening 54. The outer opening 54 faces the second rear opening 53 in the left-right direction of the vehicle. The outer opening 54 overlaps with the second rear opening 53 in the side view of the vehicle. As shown in FIG. 18, the second overlap portion 50 includes a guide fin 65. The guide fin 65 is disposed along the front edge of the second rear opening 53. As shown in FIG. 16, the guide fin 65 is disposed along the front edge of the outer opening 54. The air inside the second side cowl 18 passes through the outer opening 54 and is discharged to the outside of the second side cowl 18. The guide fin 65 straighten the air discharged from the outer opening 54. The openings 52-54 described above are larger than second fastening portions 55A-55C, which will be described later, in the side view of the vehicle. In the side view of the vehicle, the openings 52-54 are larger than second attachment holes 56A-56C, which will be described later.

As shown in FIG. 21, the second side cowl 18 includes a plurality of second protrusions 60A-60C. The second protrusions 60A-60C each protrude inward in the left-right direction of the vehicle from the inner surface of the second side cowl 18. The plurality of the second protrusions 60A-60C include a second front protrusion 60A, a second rear protrusion 60B, and a second upper protrusion 60C. The second front protrusion 60A and the second rear protrusion 60B are disposed along the lower edge of the second side cowl 18 and disposed apart from each other in the front-rear direction. The second upper protrusion 60C is disposed higher than the second front protrusion 60A and the second rear protrusion 60B. The second front protrusion 60A, the second rear protrusion 60B, and the second upper protrusion 60C are provided with first screw holes 61A-61C, respectively.

As shown in FIGS. 18 and 19, the second overlap portion 50 includes the plurality of the second fastening portions 55A-55C. The second fastening portions 55A-55C are disposed in correspondence with the second protrusions 60A-60C of the second side cowl 18. The plurality of the second fastening portions 55A-55C protrude from the outer surface of the second overlap portion 50. The plurality of second fastening portions 55A-55C include a second front fastening portion 55A, a second rear fastening portion 55B, and a second upper fastening portion 55C.

The second front fastening portion 55A is disposed in correspondence with the second front protrusion 60A. The second rear fastening portion 55B is disposed in correspondence with the second rear protrusion 60B. The second upper fastening portion 55C is disposed in correspondence with the second upper protrusion 60C. The second front fastening portion 55A and the second rear fastening portion 55B are disposed apart from each other in the front-rear direction along the second lower edge 50A of the second overlap portion 50. The second upper fastening portion 55C is disposed above the second front fastening portion 55A and the second rear fastening portion 55B. The second front fastening portion 55A, the second rear fastening portion 55B, and the second upper fastening portion 55C are provided with the second attachment holes 56A-56C, respectively.

As shown in FIG. 17, the second upper fastening portion 55C is attached to the second upper protrusion 60C by a second fastening member 62C, such as a screw, passed through the second attachment hole 56C and the second screw hole 61C. Similarly, as shown in FIG. 17, the second front fastening portion 55A is attached to the second front protrusion 60A by a second fastening member 62A. The second rear fastening portion 55B is attached to the second rear protrusion 60B by a second fastening member 62B. As a result, the second overlap portion 50 is attached to the second protrusions 60A-60C of the second side cowl 18. The fastening members 62A-62C are passed through the second attachment holes 56A-56C from the inside of the second overlap portion 50.

As shown in FIG. 18, the second overlap portion 50 includes a second recessed groove 57. The second recessed groove 57 has a shape recessed from the outer surface of the second overlap portion 50. The second recessed groove 57 extends along the second lower edge 50A of the second overlap portion 50. The lower edge of the second side cowl 18 includes a second bent portion 63. The second bent portion 63 is bent inward in the left-right direction of the vehicle. The second bent portion 63 is disposed in the second recessed groove 57.

The second overlap portion 50 includes a plurality of second locking holes 58. The plurality of the second locking holes 58 are disposed along the second dividing line L2. In the drawings, only one of the second locking holes 58 are designated by the reference numeral 58, and the reference numerals for the other second locking holes 58 are omitted. The plurality of the second locking holes 58 are provided in the second recessed groove 57. As shown in FIG. 21, the second side cowl 18 includes a plurality of second locking claws 64. In the drawings, only one of the second locking claws 64 are designated by the reference numeral 64, and the reference numerals of the other second locking claws 64 are omitted. The plurality of the second locking claws 64 are disposed along the lower edge 18C of the second side cowl 18. The plurality of the second locking claws 64 are disposed along the second dividing line L2. The second locking claws 64 are respectively locked into the second locking holes 58. As a result, the lower edge 18C of the second side cowl 18 is attached to the second lower edge 50A of the second overlap portion 50 along the second dividing line L2.

As shown in FIG. 18, the second overlap portion 50 includes a plurality of second projections 59. The plurality of the second projections 59 are disposed along the second lower edge 50A of the second overlap portion 50. The plurality of the second projections 59 protrude from the outer surface of the second overlap portion 50. Although not shown in the drawings, similar to the plurality of the first projections 39 described above, the plurality of the second projections 59 are in contact with the inner surface of the second side cowl 18. Due to the plurality of second projections 59 of the second overlap portion 50 and the plurality of second protrusions 60A-60C of the second side cowl 18, the second overlap portion 50 is disposed with a gap from the inner surface of the second side cowl 18, similar to the first overlap portion 30.

In the straddled vehicle 1 according to the present embodiment described above, the first overlap portion 30 of the first undercover 17 is disposed between the first side cowl 16 and the engine 5 in the left-right direction of the vehicle, and the upper edge 30D of the first overlap portion 30 is disposed above the boundary B1 between the crankcase 20 and the cylinder body 21. Therefore, the first overlap portion 30 reduces the radiant heat from the engine 5 to the first side cowl 16. As a result, the heat resistance of the first side cowl 16 for the engine 5 in the straddled vehicle 1 is improved even if the highly heat-resistant material is not used for the first side cowl 16. Additionally, the first overlap portion 30 overlaps with the first side cowl 16 in the side view of the vehicle. This increases the degree of freedom in designing the appearance of the first side cowl 16 and the first undercover 17.

In the straddled vehicle 1 according to present embodiment, the second side cowl 18 and the second undercover 19 are disposed symmetrically to the first side cowl 16 and the first undercover 17, respectively. Therefore, the second side cowl 18 and the second undercover 19 also provide the same effects as those of the first side cowl 16 and the first undercover 17 described above.

Although one embodiment of the present invention has been described above, the present invention is not limited to the above embodiment, and various modifications are possible without departing from the gist of the invention.

The structure of the first side cowl 16 is not limited to the above embodiment and may be modified. The structure of the first undercover 17 is not limited to the above embodiment and may be modified. For example, the shape of the first overlap portion 30 is not limited to the above embodiment and may be modified. The height of the upper edge 30D of the first overlap portion 30 is not limited to the above embodiment and may be modified.

The number, positions, or shapes of the openings in the first overlap portion 30 are not limited to the above embodiment and may be modified. The number or arrangement of the plurality of first protrusions 40A-40C of the first side cowl 16 and the plurality of first fastening portions 35A-35C of the first overlap portion 30 is not limited to the above embodiment and may be modified.

The structure of the second side cowl 18 is not limited to the above embodiment and may be modified. The second side cowl 18 may be disposed asymmetrically to the first side cowl 16. The structure of the second undercover 19 is not limited to the above embodiment and may be modified. The second undercover 19 may be disposed asymmetrically to the first undercover 17. The shape of the second overlap portion 50 is not limited to the above embodiment and may be modified. The height of the upper edge 50D of the second overlap portion 50 is not limited to the above embodiment and may be modified.

The number, positions, or shapes of the openings in the second overlap portion 50 are not limited to the above embodiment and may be modified. The number or arrangement of the plurality of second protrusions 60A-60C of the second side cowl 18 and the plurality of second fastening portions 55A-55C of the second overlap portion 50 is not limited to the above embodiment and may be modified.

### REFERENCE SIGNS LIST

5: Engine, 16: First side cowl, 17: First undercover, 20: Crankcase, 21: Cylinder body, 22: Cylinder head, 23: Crankshaft, 25: Crank web, 28: Water pump, 29: Oil cleaner, 30: First overlap portion, 31: First exterior surface, 32, 33: Opening, 36A-36C: First attachment hole, 38: First locking hole, 40A-40C: First protrusion, 42A-42C: Fastening member, 44: First locking claw, L1: First dividing line

## Claims

1. A straddled vehicle (1), comprising:
an engine (5) including a crankcase (20) and a cylinder body (21) disposed above the crankcase (20);
a side cowl (16) covering the engine (5) from a lateral side of the vehicle (1); and
an undercover (17) made of a material having a higher heat resistance than the side cowl (16), the undercover (17) including an overlap portion (30, 50) disposed between the side cowl (16) and the engine (5) in a left-right direction of the vehicle (1), the overlap portion (30, 50) overlapping with the side cowl (16) in a side view of the vehicle (1), and an upper edge (30D) of the overlap portion (30, 50) being disposed above a boundary between the crankcase (20) and the cylinder body (21).

2. The straddled vehicle according to claim 1, wherein
the engine (5) includes a crankshaft (23), and
a lower edge (30A) of the overlap portion (30) is disposed below an axis of the crankshaft (23).

3. The straddled vehicle according to claim 2, wherein
the lower edge (30A) of the overlap portion (30) is disposed below a rotation range (R1) of a crank web (25) of the crankshaft (23).

4. The straddled vehicle according to any one of claims 1 to 3, further comprising
a water pump (28) attached to the engine (5), wherein
a lower edge (50A) of the overlap portion (50) is disposed below the water pump (28).

5. The straddled vehicle according to any one of claims 1 to 4, further comprising
an oil cleaner (29) attached to the engine (5), wherein
a lower edge (50A) of the overlap portion (50) is disposed below the oil cleaner (29).

6. The straddled vehicle according to any one of claims 1 to 5, wherein
the engine (5) includes a cylinder head (22) disposed above the cylinder body (21), and
an upper edge (30B) of the overlap portion (30) is disposed above a boundary (B) between the cylinder body (21) and the cylinder head (22).

7. The straddled vehicle according to any one of claims 1 to 6, wherein
the overlap portion (30) is disposed with a gap from an inner surface of the side cowl (16).

8. The straddled vehicle according to any one of claims 1 to 7, wherein
the side cowl (16) includes a protrusion (40A-40C) protruding from an inner surface of the side cowl (16) toward the overlap portion (30).

9. The straddled vehicle according to claim 8, wherein
the overlap portion (30) includes an attachment hole (36A-36C) disposed corresponding with the protrusion (40A-40C), and
the overlap portion (30) is attached to the protrusion by a fastening member (42A-42C) passed through the attachment hole (36A-36C).

10. The straddled vehicle according to claim 9, wherein
the fastening member (44) is passed through the attachment hole (36A-36C) from an inside of the overlap portion (30).

11. The straddled vehicle according to any one of claims 1 to 10, wherein
the undercover (17) includes an exterior surface (51) disposed below the side cowl (16) in the side view of the vehicle (1), and
the overlap portion (50) extends upward from a dividing line (L1) between the side cowl (16) and the exterior surface (51) in the side view of the vehicle.

12. The straddled vehicle according to claim 11, wherein
the overlap portion (50) includes a plurality of locking holes (58) disposed along the dividing line (L1), and
the side cowl (16) includes a plurality of locking claws (44) respectively locked into the plurality of locking holes (58) disposed along the dividing line (L1).

13. The straddled vehicle according to claim 11 or 12, wherein
the side cowl (16) includes a plurality of protrusions (40A-40C) protruding from an inner surface of the side cowl (16) toward the overlap portion (30), the plurality of the protrusions (44) being attached to the overlap portion (30), and
the plurality of protrusions (44) are disposed along the dividing line (L1).

14. The straddled vehicle according to any one of claims 1 to 13, wherein
the overlap portion (30) includes an opening (32, 33, 34).

15. The straddled vehicle according to claim 14, wherein
the overlap portion (30) includes an attachment hole (36A, 36B, 36C) through which a fastening member (44) is passed for attaching the overlap portion (30), and
the opening (32, 33, 34) is larger than the attachment hole (36A, 36B, 36C).

16. The straddled vehicle according to claim 14 or 15 wherein
the opening (32, 33, 34) is disposed below the boundary (B) between the crankcase (20) and the cylinder body (21).

17. The straddled vehicle according to any one of claims 1 to 16, wherein
the overlap portion (50) has a shape having a length in an up-down direction increasing toward a front.
